# EUROPEAN PATENT APPLICATION

(11) **EP 4 385 705 A1**
(43) Date of publication of application: **19.06.2024**
(21) Application number: 23202921.5
(22) Date of filing: 11.10.2023
(51) Int. Cl.: B29C 48/385, B29C 48/69, B29C 48/275, B29C 48/285, B29B 17/00, B29B 7/90, B29B 7/74

(54) **A PLANT AND A METHOD FOR COMPOUND PRODUCTION**

(30) Priority: 14.12.2022 IT 202200025578
(71) Applicant: A.D. Compound S.p.A., 20122 Milano MI (IT)
(72) Inventor: Mercandalli, Davide, 20122 Milano MI (IT); Mercandalli, Andrea, 20122 Milano MI (IT)
(74) Representative: Perani & Partners S.p.A.

(57) **Abstract**

The present invention concerns a plant for producing compound (100). In particular, the plant comprises a first extruder (110), a first feed system (130) for supplying the first extruder (110) with shreds of plastic waste (1), a grain polymeric material (2), and preferably inorganic mineral fillers (31). A first filtering stage (180), preferably consisting of a first filter device (181) and a second filter device (182), is located downstream the first extruder (110), and a second extruder (120) downstream the first filtering stage (180). A second feed system (140) is configured to supply the second extruder (120) with at least a filtered intermediate compound (5) from the first filtering stage (180), other grain polymeric material (2), and inorganic mineral fillers (32). A second filtering stage (190) is located downstream the second extruder (120). Preferably, additives and master materials (6), including dyes, and optionally complementary materials, are supplied to the second extruder only (120). Supply lines of the various materials to be fed to the extruders (110, 120) are also described.

## Description

### Technical field

The present invention develops in the field of producing compound from recycled plastic material.

In particular, the present invention relates to a plant for producing compound and a method for producing compound starting from virgin materials, or from recycled materials such as industrial production waste or scrap, or from industrial post-consumer products.

### State of the art

As known in the state of the art, compounds are composite materials, i.e., materials comprising a mixture of elementary materials of different natures, e.g., plastics and mineral fillers.

Such compounds can be obtained from what is known as virgin materials, i.e., from a polymeric material made directly by a petrochemical industry, or from recycled materials such as industrial production waste or shred, or from industrial post-consumer products.

Therefore, the compounds can have different compositions, and thus have different chemical-physical properties.

Such compounds are widely used in various industrial fields, e.g., as structural materials.

For example, patents IT PD2011A000166 and EP 3768483 describe two examples of plants used to make compound from post-industrial plastic waste, such as polymeric textile waste, as well as polymer in granular form, inorganic mineral fillers, and additives.

Each of these materials is stored, transported, and if necessary treated in special ways to finally be supplied into an extruder where the heart of the compounding process is carried out.

In fact, thanks to the thermal and mechanical action of the extruder, the various materials introduced therein can reach the desired level of mixing and uniformity down to the microscopic level.

As described in the above-mentioned documents, plastic waste in lightweight form, such as polymeric fabrics, can be appropriately manipulated and mixed to facilitate the insertion thereof into the extruder.

### Problems of the prior art

Choosing to start from recycled materials has a positive impact on the cost and environmental sustainability of the compounding process.

However, recycled materials are much less uniform than virgin materials. This can lead to a deterioration of the chemical-physical properties of the final compound.

### Summary of the invention

An aim of the present invention is to increase the quality of the compound obtainable starting from plastic waste to such an extent that it is substantially similar to that obtainable from virgin materials.

This and other aims are achieved by a plant for producing compound in accordance with the features of claim 1 below.

Such aims are also achieved by means of a method for producing compound in accordance with the features of claim 12 below.

### Advantages of the invention

The invention envisages dividing the extrusion into two steps, which are carried out in two extruders placed in series. At least shreds of plastic waste and a first amount of grain polymeric material, as well as preferably a first amount of inorganic mineral fillers, are introduced in the first extruder, to be processed into an intermediate compound. Downstream the first extruder, a first filtering stage filters the intermediate compound, resulting in a filtered intermediate compound, which is supplied to the second extruder, together with a second amount of grain polymeric material, and inorganic mineral fillers. A final compound exits from the second extruder, which compound is forced into a second filtering stage.

Thanks to this subdivision of the extrusion process and to the intermediate filtering stage, while the first extruder must process elementary materials which are still coarse, due to the presence of shredded waste, the second extruder already receives material which has already been processed by the first extruder and filtered, as well as other materials which may already have been appropriately mixed, and can thus be dedicated to further increasing the homogeneity of the mixture until a final compound with properties comparable to those obtained starting from virgin materials is generated.

Preferably the second extruder is twin-screw, and thus allows better quality mixtures. Instead the first extruder can also be a single-screw extruder, with considerably lower costs, even less than half.

In advantageous embodiments, the first filtering stage in turn comprises several filters placed in series to reduce from time to time the size of the particulate matter which is retained.

According to another particularly preferred aspect, materials such as master materials and additives, which are known in themselves, are only added to the process in the second extruder. In fact, dyes are frequently included among these master materials and additives. At the end of a production cycle, compound may have to be made in a different colour from the previous cycle. However, without proper precautions, dye residues from the previous production cycle would remain in the extruder, soiling the compound of the next cycle and compromising the desired colouring.

It is therefore known in the art that at the end of a cycle, the dye can be removed from the extruder, carrying out a washing cycle, in which the extruder is operated using a low-value recycled material, for the sole purpose of this recycled material cleaning the devices of the plant. Such a washing technique represents a waste of material and energy.

In a preferred embodiment of the present invention, however, thanks to the fact that additives and master materials are only introduced into the second extruder, the first extruder is not affected by soiling problems resulting from the dyes used, and thus does not need to also undergo a washing cycle.

This is advantageous, as the washing of the first extruder can generally be more complex than the second extruder, according to the different ways in which materials are introduced therein.

### Brief Description of the Figures

Further features and advantages of the invention will be recognisable by a person skilled in the art from the following detailed description of exemplary embodiments of the invention. For a better understanding of the following detailed description, some embodiments of the invention are illustrated in the accompanying drawings, wherein:

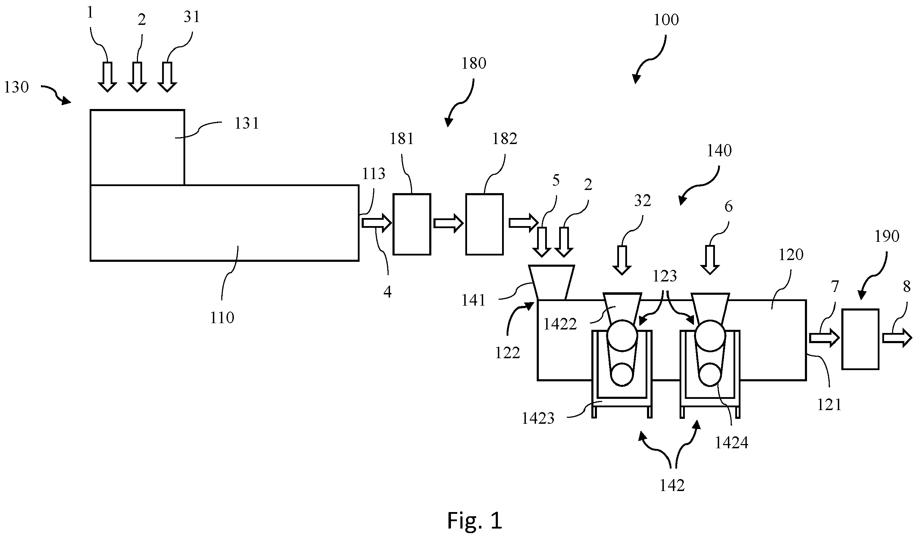

- figure 1 schematically shows a portion of a plant for producing compound according to an embodiment of the invention,
- figure 2 shows from above a first extruder and a thickener of the plant in figure 1,
- figure 3 shows the extruder of figure 2 in section from above,
- figure 4 shows a side supplier for a second extruder of the plant of figure 1,
- figure 5 shows a perspective view of some devices of a waste supply to bring shreds of plastic waste to the extruder of figure 2,

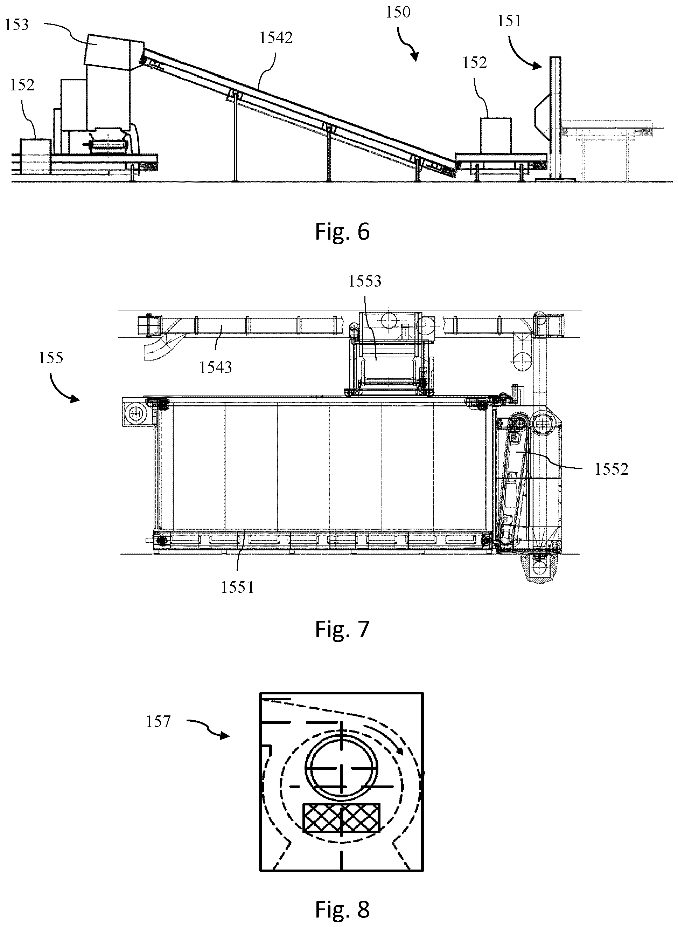

- figure 6 shows a side view of another portion of the waste supply line,
- figure 7 shows a side view of a mixing box of the waste supply line,
- figure 8 shows a compacting device of the waste supply line,
- figure 9 schematically shows in plan another portion of the waste supply line,
- figure 10 shows a side view of some devices of a grain material supply line to bring grain polymeric material to the extruders of figure 1,

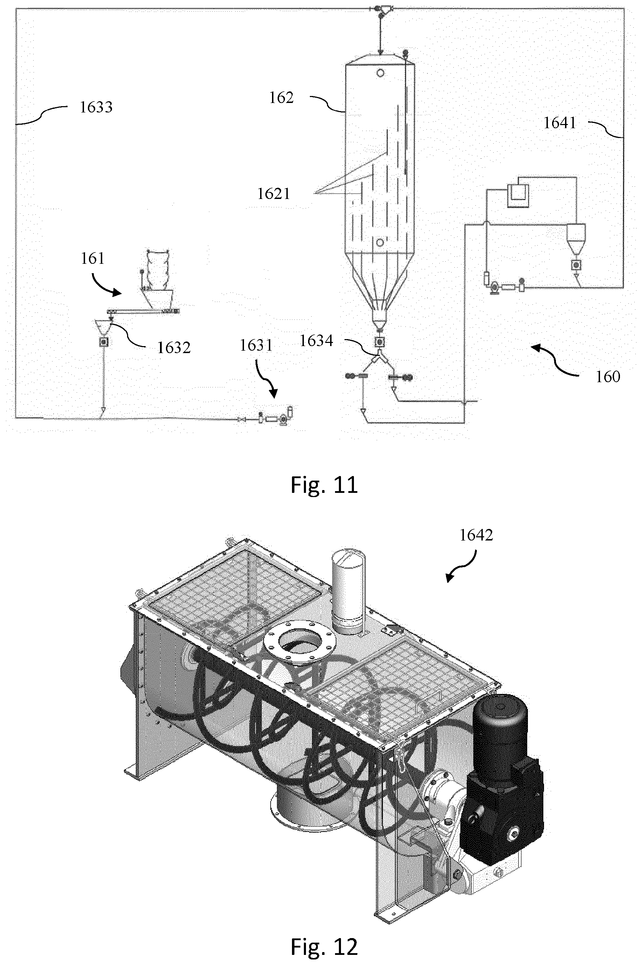

- figure 11 shows a side view of other devices in the grain material supply line,
- figure 12 shows a perspective view of a horizontal mixer of the grain material supply line,

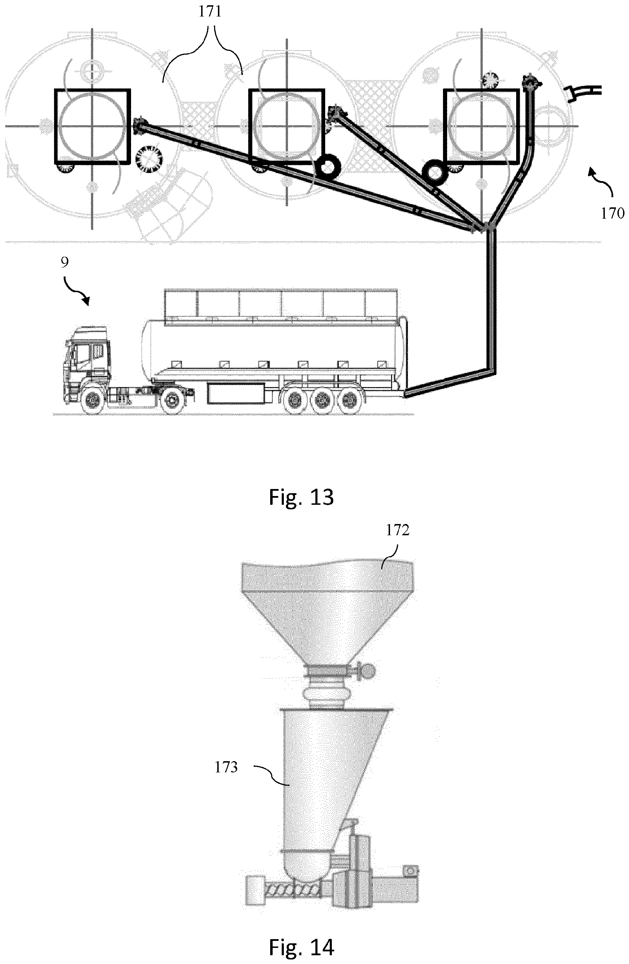

- figure 13 schematically shows a portion of a feed supply line to bring inorganic mineral fillers to the extruders of figure 1,
- figure 14 shows a side view of another portion of the feed supply line,

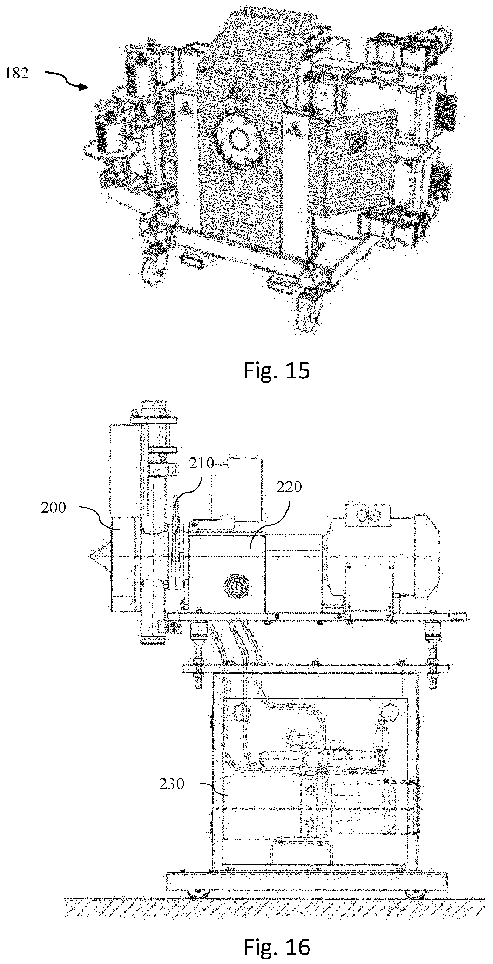

- figure 15 shows a perspective view of a continuous belt filter device of the plant of figure 1, and
- figure 16 shows some devices located downstream the extruders and filter devices of the plant of figure 1.

### DETAILED DESCRIPTION

A plant for producing compound has been indicated overall with number 100.

The plant 100 comprises a first extruder 110 and a second extruder 120 located downstream the first extruder 110.

Each extruder 110, 120, as is known, has an extruder body in which one or more channels 111 are formed, extending mainly in a longitudinal direction X-X, which in use is usually horizontal.

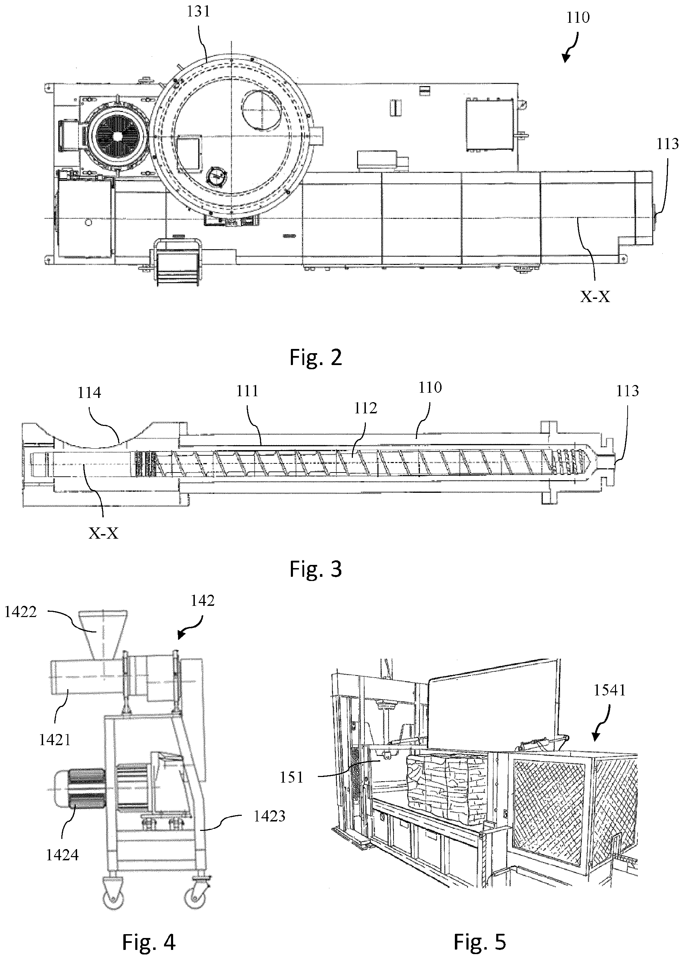

In each channel 111 a rotation shaft 112 is housed, on which plastic material processing and/or conveying elements such as screw elements and blade elements are provided. Furthermore, each extruder 110, 120 comprises motor means connected to each rotation shaft 112 to rotate each rotation shaft 112. The internal components of the extruders 110, 120 are shown in figure 3 for the first extruder 110 only.

In the present description, it should be noted that when reference is made to screws or screw elements which convey material, reference is made to the operating principle of a worm screw, even where not explicitly stated.

An outlet opening 113, 121 is formed in the extruder body to discharge material from the one or more described channels 111 to the outside, usually along the longitudinal direction X-X. In addition, one or more inlet openings 114, 122, 123 are formed in the extruder body, communicating with the one or more channels 111 to introduce material to be processed into the one or more channels 111.

A known example of an input opening to an extruder 110, 120 is given by an upper opening 122, spaced from the outlet opening 113, 121 and facing upwards. Another known example of an inlet opening is a side opening 123, oriented to introduce material transversely to the longitudinal direction X-X, preferably horizontally. Common examples are extruders 110, 120 with several side openings 123, distributed along the longitudinal direction X-X between the upper opening 122 and the outlet opening 113, 121.

As is known, each extruder 110, 120 can comprise electrical resistances configured to heat the material to softening or melting in the one or more channels 111. Furthermore, each extruder 110, 120 can include a cooling system configured to dispense water or diathermic oil onto the material in the one or more channels 111 when the temperature therein exceeds a predetermined threshold, as measured by one or more temperature sensors.

According to an aspect of the present description, the plant 100 comprises a first feed system 130 configured to introduce material into the first extruder 110, and a second feed system 140 configured to introduce material into the second extruder 120. More in detail, the first feed system 130 comprises one or more first feed members 131, each positioned so as to feed material to the first extruder 110, in particular through a respective inlet opening 114. Similarly, the second feed system 140 comprises one or more second feed members 141, 142, each positioned so as to feed material to the second extruder 120, in particular through a respective inlet opening 122, 123. It should be noted that, in the presence of several distinct first and/or second feed members 131, 141, 142, the various first feed members 131 of the first feed system 130 are not necessarily connected to each other, and the various second feed members 141, 142 of the second feed system 141, 142 are not necessarily connected to each other.

A known example of a feed member for an extruder 110, 120 is given by a hopper 141 fixed to an upper inlet opening 122. Another known example is given by a side supplier or forcer 142, which comprises a screw 1421, or a pair of screws 1421, mounted in a special channel, transverse to the longitudinal direction X-X and connected to a side inlet opening 123 of the extruder 110, 120 for introducing material therein. Preferably, the side supplier 142 comprises a hopper 1422 connected to the screw 1421 in a position opposite the extruder 110, 120 and configured to channel material into the screw 1421 from above. The screw 1421 and the hopper 1422 are preferably mounted on the same frame or carriage 1423 of the side supplier 142. A motor 1424 is also mounted on the same frame 1423, connected to the screw 1421 by means of an appropriate transmission.

In both these examples, as well as for other hoppers which can introduce material into other described devices, the material of interest can be poured or forced into the hopper from a discharge of a device located upstream. Such a discharge can be rigidly connected to the hopper, or connected by means of flexible sleeves, or it can be separate from the hopper to let the material fall into the hopper by gravity.

One of the materials which the first feed system 130 is configured to supply to the first extruder 110 is shreds of plastic waste 1. Plastic waste 1 refers to recovered polymeric material, preferably in the form of loose sheets such as films, fabrics, nonwoven fabrics and yarns. In an embodiment, post-production industrial waste products are used as plastic waste 1, such as gowns or masks which have not been put on the market for whatever reason, e.g., because they were defective. In another embodiment, post-consumer waste products are used as plastic waste 1, preferably industrial, which have been put on the market, used, and then thrown away. In this latter case, washing and optionally drying devices can be provided in the plant in order to remove impurities from the plastic material.

Shreds of plastic waste 1 are intended as pieces of plastic waste 1 of limited size, e.g., with an extension no greater than 20 cm, preferably no greater than 10 cm, along all the directions of the piece. The shreds are obtained by means of subdividing, in particular tearing, cutting or shredding, plastic waste 1, and can also assume irregular shapes different from one another.

The plant 100 comprises a waste supply line 150 configured to feed shreds of plastic waste 1 to the first feed system 130. Of this and other supply lines, not all components are necessarily illustrated, but only the main ones. However, these supply lines are largely familiar to those skilled in the art, and are susceptible to reconfiguration with different combinations or arrangements of components.

Preferably, the waste supply line 150 comprises devices configured at least to shred plastic waste 1 in the form of shreds, mix the shreds together, and convey an adjustable amount of mixed shreds to the first feed system 130.

In more detail, the waste supply line 150 comprises a shredder 153 configured to shred plastic waste 1 in the form of shreds. In the preferred embodiment, a packaging removal station (not shown) is provided upstream the shredder 153, where an operator or an automatic machine can remove packaging from packed batches of plastic waste 1. Preferred packaging includes bale wraps, coil supports, octabins, bags, strapping and iron wire. In addition to the packaging, bodies of extraneous materials are preferably removed from the plastic waste 1, which may be found together therewith. One or more metal detectors 152 can be provided to detect and signal the presence of metal bodies among the plastic waste 1. Checking for the presence of foreign bodies can optionally be carried out repeatedly in several parts of the waste supply line 150 for successive, coarser checks upstream and finer checks downstream.

In addition, in the preferred embodiment, the waste supply line 150 comprises, upstream the shredder 153, a shear 151, preferably a vertical shear 151, configured to cut piles of plastic waste 1 into intermediate pieces of plastic waste 1, which in turn will be shredded into shreds by the shredder 153.

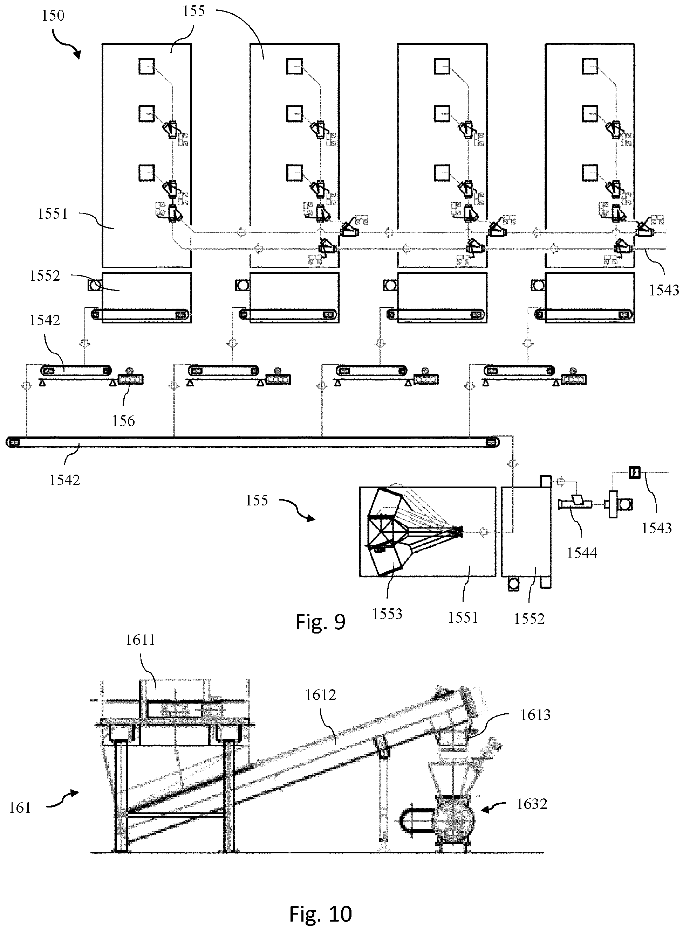

The plastic waste 1, in piles, intermediate pieces, or shreds, can be moved along the waste supply line 150, between these devices and other devices described below, by more or less automated conveying members 1541, 1542, 1543, 1544. Preferred examples of conveying members 1541, 1542, 1543, 1544 include conveyor belts 1542, horizontal or inclined, forklifts (not shown) and pushers 1541. Preferably, downstream the shredder 153, the waste supply line 150 comprises one or more pipes 1543 and one or more blowers or fans 1544 (only one shown in figure 9) as conveying members, each blower or fan 1544 being configured to create an air flow in a respective pipe 1543 so as to convey the shreds of plastic waste 1 along the pipe 1543 between two devices of the waste supply line 150. In the event of branching of one or more material paths, the conveying members 1541, 1542, 1543, 1544 may also include one or more diverters and valves of a known type, configured to direct the waste into paths alternative to one another.

In some embodiments, the waste supply line 150 comprises one or more mixing boxes 155 configured to receive, mix and discharge shreds of plastic waste 1. Preferably, each mixing box 155 comprises in a known manner a movable bottom 1551 and a spiked miller 1552 configured to lift and discharge outside the mixing box 155 shreds of plastic waste 1 from the movable bottom 1551, where the movable bottom 1551 is configured to convey an accumulation of shreds of plastic waste 1 to the miller 1552. In addition, each mixing box 155 can comprise a movable supply device 1553, such as a rotary joint or an oscillating carriage, which is mounted on a top of the mixing box 155. The movable supply device 1553 is configured to discharge shreds of plastic waste 1 towards the movable bottom 1551, precisely towards different portions of the movable bottom 1551, by moving along the top of the mixing box 155.

Mixing shreds of plastic waste 1 in each mixing box 155 increases the uniformity of the final compound. Several mixing boxes 155 can be provided to increase the degree of mixing and/or for temporary storage purposes. In an embodiment, a plurality of mixing boxes 155 are provided upstream, operating in parallel with one another, and one or more mixing boxes 155 are provided downstream. These operate according to the same general principles, although they can have different dimensions and/or individual components, such as different movable supply devices 1553.

Conveying members such as those already described 1541, 1542, 1543, 1544 are positioned to transport shreds of plastic waste 1, from upstream mixing boxes 155 to one or more downstream mixing boxes 155, preferably converging at a single downstream mixing box 155. Therefore, the downstream mixing box 155 is configured to mix together shreds of plastic waste 1 coming from separate upstream mixing boxes 155.

In a similar embodiment, it is possible to convey and store the shreds obtained from different batches of plastic waste 1 in different upstream mixing boxes 155. For this purpose, the conveying members 1541, 1542, 1543, 1544 can be controlled to select specific upstream mixing boxes 155 and transport shreds of waste coming from the shredder 153 to only the mixing box 155 selected from time to time, e.g., by means of the above-mentioned diverters.

While the plastic waste 1 from the same batch is assumed to be uniform in materials, waste from different batches can consist of different plastics or of similar plastics in different proportions. Therefore, the mixing boxes 155 and conveying members 1541, 1542, 1543, 1544 can preferably be controlled to convey different predetermined proportions of shreds of plastic waste 1 from different upstream mixing boxes 155 to one or more downstream mixing boxes 155. The predetermined proportions can be decided from time to time by an operator, or they can be set by an electronic control system. The choice of different proportions can give the final compound different properties.

In yet another embodiment, several mixing boxes 155 operating in parallel can be provided, without any other mixing boxes 155 being provided downstream thereof. The conveying members 1541, 1542, 1543, 1544 can then convey the shreds of waste from these mixing boxes 155 to whatever device is downstream, preferably in controllable proportions.

Still alternatively, a plurality of mixing boxes 155 can be arranged in series, with none of these mixing boxes 155 having others in parallel.

In order to control the movement of the shreds of waste by the conveying members 1541, 1542, 1543, 1544, the conveying members 1541, 1542, 1543, 1544 are adjustable in speed. Furthermore, preferably the shred supply line 150 comprises one or more flow sensing members 156, shown only schematically in the figures and configured to measure a mass and/or volume flow rate of shreds of waste at one or more conveying members and/or mixing boxes 155 and/or other devices to be described in the following. Preferred examples of flow sensing members 156 for shreds of waste comprise load cells, incorporated for example in a conveyor belt or in a mixing box 155. Another example of a flow sensing member 156, of an indirect type, can be a screw, in which the volume of material which can be received between two crests of the screw and the advancement rate thereof determine the volumetric flow rate of the material. This type of dosing, defined volumetric dosing, can have performance comparable to gravimetric dosing by means of load cells, provided that the density of the material to be dosed is sufficiently uniform.

Downstream the shredding, conveying and preferably mixing of the shreds of waste, in particular downstream one of the described pipes 1543, the shred supply line 150 preferably comprises a compacting device 157 configured to compact a flow of shreds of waste, by conveying the shreds of waste from a duct of larger section to a duct or a discharge of smaller section. In particular, in conveying the shreds, a certain volume of air in which the shreds are suspended is expelled, extracted or escapes between the duct of larger section and the duct or discharge of smaller section. The compacting device 157 facilitates the handling of shreds of waste downstream the waste supply line 150, in particular by the first feed system 130, as discussed in the following. Optionally, a load cell can be included in the compacting device 157.

An embodiment of a compacting device 157 includes a mechanical condenser, configured to receive a flow of shreds of waste from above, let the shreds fall by gravity along a fall path towards a bottom, and suck air through a grate or side filter, positioned along the fall path and configured to prevent the suction of the shreds of waste. The grate or side filter is preferably cylindrical in shape, so that it surrounds the fall path.

Another embodiment of a compacting device 157 includes a bottom-draining centrifuge, configured to convey the shreds towards a central hole while the air is free to exit from above.

Another of the materials which the first feed system 130 is configured to supply to the first extruder 110 is grain polymeric material 2. Even the second feed system 140 is configured to supply the second extruder 120 with grain polymeric material 2. Preferred grain polymeric material 2 comprises polypropylene, high density polyethylene, medium density polyethylene, low density polyethylene, elastomers, polyethylene terephthalate, polyamide, polycarbonate and polystyrene.

Here, grain polymeric material 2 means polymeric material provided in the form of an accumulation of solid corpuscles of various possible sizes. In the art, a distinction is made between flaked or ground material with a size from 0.3 to 1.2 cm, densified material with a size of about 0.8 cm, granulated material with a size of about 0.2 cm, and powdered material with a size of about 0.02 cm. All these materials are to be considered as examples of grain polymeric material 2.

In various embodiments, virgin materials, i.e., direct products of other plastic processing processes, or recovered materials, and in particular post-consumer recovered materials, such as production waste from other processes, or post-consumer recovered materials, can be used as grain polymeric material 2. In this case, the post-consumer materials are usually provided in a rigid, non-granular form, and thus grinding and washing steps can be envisaged before introducing them into the compounding process. Clearly, virgin materials are usually more uniform in terms of chemical and physical properties with respect to recycled materials. Nevertheless, excellent results can be obtained for the final compound even when starting from recycled materials.

The plant 100 comprises a grain supply line 160 configured to feed grain polymeric material 2 to the first and/or second feed system 130, 140. It is possible for a single grain supply line 160 to supply the feed systems 130, 140 of both extruders 110, 120, e.g., with an appropriate bifurcation, or for two separate and distinct grain supply lines 160 for the feed systems 130, 140 of the two extruders 110, 120.

In such a case, in an embodiment a first grain supply line 160, preferably the one supplying the first feed system 130, is configured to convey recovered grain polymeric material 2, while a second grain supply line 160, preferably the one supplying the second feed system 140, is configured to convey virgin grain polymeric material 2. Optionally, the first grain supply line 160 is configured to convey recovered post-consumer grain polymeric material 2, and thus preferably includes special grinding and/or washing members. In an embodiment in which virgin grain polymeric material 2 is not necessarily envisaged, the second grain supply line 160 is configured to convey post-industrial grain polymeric material.

In both of these embodiments, better quality grain polymeric material is supplied to the second extruder 120 with respect to the first extruder 110. Advantageously, as will be described in the following, the grain polymeric material 2 which is introduced into the first extruder 110 is subjected to a greater number of processes and filtering, which are of less importance for the virgin grain polymeric material 2 introduced into the second extruder 120.

In the following, for the sake of simplicity, a single grain supply line 160 will be described, noting that the two possible grain supply lines 160 may or may not have many features in common, and that any differences between the two, related to the washing and shredding of recovered post-consumer polymeric material in rigid form, are known to those skilled in the art.

In the preferred embodiment, the grain supply line 160 comprises one or more storage silos 162. Furthermore, the grain supply line 160 comprises conveying members 1631, 1632, 1633, 1634, configured to supply grain polymeric material 2 to each storage silo 162 and to convey grain polymeric material 2 from each storage silo 162 to the first and/or the second feed system 130, 140, if necessary passing through further devices of the grain supply line 160. The conveying members 1631, 1632, 1633, 1634 preferably comprise pipes 1633 for pneumatic conveying, at least one compressor 1631 connected to the pipes 1633 to create a flow of compressed air in the pipes 1633, and one or more rotocells 1632, of known type, connected to the pipes 1633 and configured to introduce the grain polymeric material 2 into the pipes 1633.

In order to introduce the grain polymeric material 2 into the conveying members 1631, 1632, 1633, 1634, the grain supply line 160 preferably comprises a supply auger 161, having a feed portion 1611 configured to receive grain polymeric material 2 from above, a discharge portion 1613 connected to a rotocell, and one or more screws 1612 configured to convey grain polymeric material 2 from the feed portion 1611 to the discharge portion 1613.

An operator can pour grain polymeric material 2 into the feed portion 1611, preferably by means of a forklift and/or a crane, after having opened a package of a batch of grain polymeric material 2, and optionally removing impurities or other foreign components from the grain polymeric material 2.

It should be noted that different polymeric materials, e.g., from separate batches of grain polymeric material 2, can be supplied to distinct storage silos 162. Furthermore, depending on the desired compound to be obtained, different polymeric materials or combinations thereof can be conveyed at different times to the first and the second feed system 130, 140. Therefore, the conveying members 1631, 1632, 1633, 1634 are preferably branched and controllable, for example by means of diverter devices 1634 connected to the pneumatic conveying pipes 1633, so as to direct grain polymeric material 2 from, or to, distinct storage silos 162.

Preferably, the grain supply line 160 also comprises one or more flow sensing members (not shown) configured to measure a mass and/or volume flow rate of the grain polymeric material 2. In an embodiment, the flow sensing members comprise at least one dosing silo provided with a load cell. Additionally or alternatively, the dosing silo can comprise a screw with adjustable speed, such that a fixed and known volume of material is conveyed between two crests of the screw in a time inversely proportional to the speed of the screw, i.e., a volumetric dosing.

The dosing silo is generally smaller than the storage silo 162, and is located downstream the storage silo 162. Where there is more than one storage silo 162, the conveying members 1631, 1632, 1633, 1634 are preferably configured to converge grain polymeric material 2 coming from more than one storage silo 162 into the dosing silo. Thereby, different grain polymeric materials 2 can be brought to the dosing silo for different production cycles. The grain supply line 160 can thus be controlled in flow rate based on the flow rate detected by the flow sensing members.

In addition, the grain supply line 160 can comprise mixing members 1641, 1642 configured to mix the grain polymeric material 2 to increase the uniformity thereof.

For this purpose, in the preferred embodiment the conveying members 1631, 1632, 1633, 1634 are configured for recirculating grain polymeric material 2 in at least one storage silo 162, preferably in each thereof. This can be obtained by means of one or more pipes 1633 assuming the function of recirculating pipes 1641, in addition to other known recirculating members not detailed further herein. The recirculating pipes 1641 are positioned so as to transport polymeric material from a discharge of storage silos 162 to an inlet of the same storage silo 162. More in detail, the conveying members 1631, 1632, 1633, 1634 can be selectively controlled, in the manners already described, for example by means of diverter devices 1634, to convey material in output from a storage silo 162 to the first and the second feed system 130, 140, or to recirculate such material to the storage silo 162 itself.

To further promote mixing, at least one storage silo 162, preferably each thereof, comprises an organ pipe mixing system 1621 therein, i.e., tubular elements arranged substantially vertically and in parallel with one another, within which the grain polymeric material 2 is free to fall by gravity and/or accumulate.

In addition, again for the purpose of better mixing, the grain supply line 160 can comprise one or more horizontal mixers 1642 of known type, each having a mixing chamber and a horizontal rotation shaft inside the chamber. The rotation shaft is connected to a plurality of coaxial propeller elements rotating together with the rotation shaft.

The first feed system 130 is configured to supply to the first extruder 110, throuh the same or separate inlet openings 114 of the extruder 110, at least shreds of plastic waste 1 and a first amount of grain polymeric material 2, coming from the waste supply line 150 and the grain supply line 160, respectively.

In an embodiment, the shreds of plastic waste 1 and the grain polymeric material 2 are introduced into the first extruder 110 by means of first feed members 131, through distinct inlet openings 114 of the first extruder 110, for example by means of a hopper of an upper inlet opening or a side supplier.

For supplying shreds of waste, it should be noted that these, if not previously compressed in various possible manners, tend to resist insertion into high-pressure containers, such as an extruder 110, 120 may be in operation, as the pressure facilitates the reflux thereof outwards before the insertion is completed.

In some embodiments of the plant 100, thanks to the compacting device 157 described above, it is possible to use a forced-flow device such as one of the side suppliers described above as the first feed member 131 for the shreds of waste.

In another embodiment, a first feed member 131 can be provided for the common supply of at least the shreds of plastic waste 1 and the grain polymeric material 2. An example of such a first common feed member 131 is given by a thickener 131. Therefore, the same thickener 131 is configured to supply a thickened mixture containing at least shreds of plastic waste 1 and grain polymeric material 2 to the first extruder 110 through a single inlet opening 114 of the extruder 110.

More in detail, the thickener 131 as known has an inner chamber containing at least one set of rotating blades. The inner chamber is connected to at least the waste supply line 150 and the grain supply line 160, in order to receive materials therein, including at least shreds of plastic waste 1 and grain polymeric material 2. The at least one set of rotating blades is configured to comminute, mix and frictionally heat, until softening and/or melting, the polymeric materials in the inner chamber.

The thickener 131 is also preferably configured to control the temperature in the inner chamber thereof by introducing water therein when the temperature exceeds a predetermined maximum threshold.

For the introduction of material from the thickener 131 to the first extruder 110, in an embodiment, the thickener 131 has an opening 114 which directly puts the inner chamber thereof in communication with the one or more channels 111 of the first extruder 110, and thus simultaneously represents an inlet opening 114 of the extruder 110. In such a case, the body of the thickener 131 in which the inner chamber is formed is either integrated or fixed directly to the extruder body. It is therefore the set of blades which forces the material directly into the first extruder 110.

In another embodiment, the thickener 131 comprises a discharge conduit, optionally provided with a screw, configured to force or discharge thickened material from a bottom of the thickener 131 to the first extruder 110. In particular, such a discharge conduit can be directly connected to the first extruder 110 or to one of the side supply devices described, or it can let material fall by gravity into a hopper thereof.

Another material which is involved in the extrusion process is inorganic mineral fillers 31, 32. The inorganic mineral fillers 31, 32 are usually provided in the form of powders, with a size of about 0.005 cm per particle. Known examples of mineral fillers 31, 32 include calcium carbonate and talc.

The plant 100 therefore comprises a filler supply line 170 configured to supply mineral fillers 31, 32, in various embodiments, at least to the second feed system 140, and preferably also to the first feed system 130, to be introduced respectively into the second extruder 120, and optionally also into the first extruder 110. In particular, in an embodiment a first amount of mineral fillers 31 can be introduced into the thickener 131 together with shreds of waste and grain polymeric material 2.

It should be noted that, where different types of mineral fillers 31, 32 are envisaged, the filler supply line 170 can consist of a plurality of substantially independent lines which can lead to introducing different types of fillers in the same position of the same extruder 110, 120, or in different positions of the same or distinct extruders 110, 120.

The filler supply line 170 comprises at least one storage silo 171, 172 for each type of filler envisaged. Usually, mineral fillers 31, 32 are supplied inside tanks, e.g., tank trucks 9, and are transferred from a tank to a storage silo 171, 172 though a pneumatic duct.

Preferably, for each type of filler, the filler supply line 170 comprises several storage silos 171, 172, in particular a main storage silo 171 and a smaller storage silo 172, located downstream the main storage silo 171. The smaller storage silo 172 carries out a temporary stock function, to dispense fillers in a substantially continuous manner to the devices located downstream, while in turn it is re-fed by the main storage silo 171, preferably in a discontinuous manner, i.e., until it is filled when a level of fillers in the smaller storage silo 172 has fallen below a minimum reserve threshold. In particular, the smaller storage silo 172 can be re-fed from the main silo 171 by means of an appropriate conveying duct connected to a compressor and one or more valves.

Preferably, downstream the storage silos 171, 172, the filler supply line 170 comprises a doser 173 for each type of filler. The doser 173 can be of the gravimetric or volumetric type, i.e., based on a mass measurement by means of load cells, or a volume measurement by means of a speed-adjustable screw, according to the modes already introduced for the dosing silo of the grain supply line 160.

From the doser 173, the fillers can be introduced directly into the thickener 131, or into one or more other individual first or second feed members 131, 141, 142, such as the side supply devices described 142, to then be introduced into the first and/or second extruder 110, 120 through one of the respective inlet openings 114, 122, 123. In the preferred embodiment, both the first feed system 130 is configured to feed the first extruder 110 a first amount of inorganic mineral fillers 31, and the second feed system 140 is configured to feed the second extruder 120 a second amount of inorganic mineral fillers 32.

The first extruder 110, preferably a single-screw extruder, is configured to process the shreds of plastic waste 1 and grain polymeric material 2, and preferably the mineral fillers 31, into an intermediate compound 4. The intermediate compound 4 is forced from the first extruder 110, through the outlet opening 113, to a first filtering stage 180, downstream the first extruder 110. The first filtering stage 180 is configured to filter the intermediate compound 4, obtaining a filtered intermediate compound 5.

In the preferred embodiment, the first filtering stage 180 comprises a first filter device 181 and a second filter device 182 located downstream the first filter device 181. In particular, the first filter device 181 is configured to retain first impurities with a first particle size, and is preferably a piston filter device 181. The second filter device 182 is preferably configured to retain second impurities with a second particle size, which is finer than the first particle size of the first impurities, and is preferably a continuous-belt filter device 182.

However, this does not exclude embodiments in which the filtering power of the first and second filter device 181, 182 are equal, or even in which the filtering power of the second filter device 182 is less than that of the first filter device 181, for example when high purity is not required and the flow of the compound is not to be excessively obstructed.

More in detail, the piston filter device 181 is a counter-flow filter device of known type. It comprises at least one mesh filter, preferably of hemispherical shape, and at least one retractable piston configured to cyclically press the intermediate compound 4 through the mesh filter in a main flow direction. During filtering, impurities accumulate in the mesh filter, developing an increasing resistance to the flow of the intermediate compound and thus to the movement of the piston, which must develop a greater pressure. At least one counter-flow channel bypasses the mesh filter, and is configured to direct the intermediate compound 4 pushed by the piston in the direction opposite the main flow direction.

The counter-flow channel and the mesh filter are sized so that the intermediate compound 4 flows through the mesh filter in the main flow direction as long as the piston exerts a pressure below a predetermined pressure threshold, and in the opposite direction when the piston pressure is above the threshold. Thereby, the flow proceeds in the main direction as long as the accumulation of impurities is acceptable, and when this becomes excessive, the piston exerts a greater pressure and the flow of the intermediate compound 4 in the opposite direction automatically purges the mesh filter. In any case, as with any filter device, the filter must be replaced periodically, albeit less frequently with respect to similar filter devices without counter-flow mechanisms.

The continuous filter device 182 instead has two filter channels with respective filters configured for parallel operation, so that the filter in one channel can be replaced while the intermediate compound 4 is only forced into the other channel.

The second extruder 120, preferably twin-screw, is arranged downstream the first filtering stage 180. The second feed system 140 is configured to supply the filtered intermediate compound 5 to the second extruder 120. Furthermore, as already described, the second feed system 140 is configured to supply the second extruder 120 with a second amount of grain polymeric material 2, and a second amount of inorganic mineral fillers 32. Preferably, at least some of these materials are supplied by means of respective distinct second feed members 141, 142, through distinct inlet openings 122, 123 of the second extruder 120, in particular the hopper 141 of an upper inlet opening 122 for the grain polymeric material 2 and filtered intermediate compound 5, and respective side suppliers 142 connected to side inlet openings 123 for the mineral fillers 32. However, other insertion modes or combinations thereof are possible for each of these materials in the second extruder 120, as well as for other materials to be introduced in the following.

Thanks to its twin-screw nature, the second extruder 120 is capable of mixing mineral fillers 32 with the filtered intermediate compound 5 very effectively, so that even large amounts of mineral fillers 32 can be introduced, limiting the risk of jamming to human or machine error.

According to an aspect, in addition to the materials already described, other materials can be used in the production of the compound. For example, additives, master material and/or complementary material 6 can be used.

Additives and master materials are both materials which can be included in the compound to give it certain known chemical-physical properties, including detergent resistance, fire resistance, UV resistance, surface scratch resistance, etc. Known examples of additives and master materials are dioxide (in particular, titania) and peroxide (in particular, di-tert-butyl peroxide). Additives and master materials are usually added in an amount less than 5%, preferably less than 2%, with respect to the weight of the compound.

It should be noted that the additives are supplied in powder or corpuscle form, while the master material is supplied in granular form. Nevertheless, before being supplied to an extruder 110, 120, the additives can be pre-dispersed in other granulated material, such as master material or grain polymeric material.

Complementary material means a material, generally different from those already described, i.e., mineral fillers 31, 32, grain polymeric material 2, shreds of waste 1, additives and master materials, which is introduced to alter some properties of the compound. When envisaged, the supplementary materials are usually added in an amount greater than 5%, preferably greater than 10%, with respect to the weight of the compound, and can even reach considerable percentages such as 50%.

Complementary materials can include reinforcing materials to improve the mechanical properties of the compound, such as elongation at break, load at break, and hardness. Other complementary materials can improve thermal properties, such as hot dimensional stability. Other complementary materials can improve physical properties such as density, to increase or decrease it according to the desired application, as well as electrical or magnetic properties. Other complementary materials can enhance bioactive properties, e.g., for use of the compound in contact with animal body tissues.

It should be noted that complementary materials intended to improve a specific property can cause deterioration under other properties.

The complementary materials can be subdivided not only according to the properties which they confer to the compound but also based on the nature thereof. In particular, fibrous reinforcing materials, such as glass fibre (with reinforcing function) and wood fibre (e.g., to reduce density), and powdered reinforcing materials, such as aluminium oxide, inorganic materials and organic materials, saline materials or materials with different levels of acidity or basicity, are known.

Preferably, the additives and/or master materials and/or complementary material 6 are supplied to the second extruder 120 only by the second feed system 140, e.g., by means of one or more side suppliers 142 connected to side inlet openings 123, but embodiments in which they are also or only supplied to the first extruder 110 by the first feed system 130 are not excluded.

In particular, between additives and master material, at least one dye is preferably supplied to the second extruder 120, while the first feed system 130 is not configured to feed dyes to the first extruder 110. In other words, first feed members configured to introduce dyes, or more generally additives and master material, into the first extruder 110, are not envisaged in the first feed system 130. Advantageously, only the second extruder 120 needs washing when successive production cycles require different dyes.

The insertion of complementary material in the second extruder 120 alone is also advantageous, as the homogeneity of the filtered intermediate compound 5 facilitates the uniform dispersion thereof in large amounts, even up to 80%. Conversely, by introducing the complementary material already in the first extruder 110 it could be retained by the first filtering stage 180, and then be removed by the intermediate compound, with the additional risk of clogging the first filtering stage 180.

The feed system involved, preferably the second feed system 140 only, comprises a plurality of gravimetric or volumetric dosers 144, for dosing additives and master materials 6. Preferably, the dosing occurs in a screw of the doser 144, for the powdered additives, which are then forced into the extruder, e.g., the second extruder 120, directly from the same screw or from a consecutive screw 120.

Instead, the dosing can occur on a vibrating raceway of the doser 144 for the granulated master material, which is then discharged from the vibrating raceway to one of the side suppliers described, to be introduced into the extruder, e.g., the second extruder 120.

It should be noted that at the beginning of the production of different types of compound, a recipe is selected for the compound, which can envisage different types and amounts of additives and master material 6. Accordingly, the requested types of additives and master material 6 are poured into respective dosers 144. In some cases, one or more dosers 144 are not filled with a single additive or master material 6, but with a predetermined mixture thereof. In order to create the appropriate mixture, different types of additives and/or master materials 6 can be introduced into a cylindrical drum, and then subjected to mixing inside the drum by means of a drum turning device. The drums can be emptied into the dosers by means of forklifts.

The second extruder 120 is configured to process the filtered intermediate compound 5 and the second amount of grain polymeric material 2, as well as the second amount of mineral fillers 32 and additives and master material 6, if envisaged, into a final compound 7, forced through the outlet opening 121 thereof.

The second extruder 120 preferably comprises a degassing pump (not shown) configured to strip gases from the filtered intermediate compound 5, expelling them from the inner channel of the second extruder 120.

Downstream the second extruder 120, the plant 100 comprises a second filtering stage 190, configured to filter the final compound 7, obtaining a filtered final compound 8. The second filtering stage 190 can also comprise a continuous-belt filter device 190, similar to that of the first filtering stage 180, but with a higher flow rate made necessary by the insertion of material into the second extruder 120 which is added to the filtered intermediate compound 5.

Preferably, the continuous belt filter device 190 comprises a main filter system and a pre-filtering system (also known as a breaker), upstream the main filter system, to protect the main filter system from clogging due to coarse particles.

The main filter system can comprise filter channels operating in parallel, as described for the second filter device 182.

In contrast, the second filter device 182 does not need a pre-filtering system thereof, as it receives material already filtered by the first filter device 181.

It should be noted that the second filtering stage 190 can be configured in different embodiments to retain impurities with larger, smaller or equal particle sizes with respect to any of the filter devices 181, 182 of the first filtering stage 180. For example, a relatively high filtering power can be attributed to the first filtering stage 180, in order to maximise the homogeneity of the filtered intermediate compound 5 and to favour the mixing of all the others introduced directly into the second extruder 120, and subsequently a second filtering stage 190 with a relatively low filtering power can be employed, in order to avoid retaining useful components of the compound which can be introduced into the second extruder 120, e.g., complementary materials such as glass or wood fibres, which must not be filtered.

Downstream the second filtering stage 190, in a known manner, the plant can comprises other devices among those described in the following. They can include a die 200 and a cutting assembly 210, configured together to granulate the filtered final compound 8. In particular, the filtered final compound 8 is forced through a plurality of holes of the die 200, and cut by at least one blade of the cutting assembly 210. The blade of the cutting assembly 210 is preferably pressed towards the die 200 by a hydraulic assembly to remain in contact with the die 200, on an opposite side of the die 200 with respect to the second extruder 120.

Furthermore, the plant 100 can comprise a cooling device 220, which is configured to pour a stream of water over the die 200 and cutting assembly 210 to cool them. Furthermore, the stream of water cools and draws the granulated filtered final compound. More in detail, the cutting assembly 210 can be positioned inside a water container of the cooling device 220.

The stream of water is led to a centrifuge 230, configured to dry the granulated filtered final compound. For example, the centrifuge 230 can comprise a rotating grate, configured to let the water stream flow while retaining the granulated filtered final compound. Preferably, the cooling device 220 also includes a recirculating system configured to collect water from the centrifuge 230, purify it and pour it back into the die 200 and cutting assembly 210.

Downstream the centrifuge 230, the dried compound can be conveyed, by means of conveying members similar to those already described, to other known devices such as a vibrating screen to split agglomerates of granules, a colorimeter, and a weighing machine, to then be stored as final material.

As mentioned above, a method for producing compound is also the subject-matter of the present invention. From the above description of the plant, the steps of the method which are carried out by the various components of the plant are already clear to those skilled in the art. In any case, the main steps of the method and some optional steps are summarised in the following.

The method comprises supplying a first extruder 110 with shreds of plastic waste 1 and a first amount of grain polymeric material 2. The method further comprises processing the shreds of plastic waste 1 and the grain polymeric material 2 in the first extruder 110 into an intermediate compound 4. Then the method comprises filtering the intermediate compound 4 to obtain a filtered intermediate compound 5. Downstream thereof, the method comprises supplying a second extruder 120 with the filtered intermediate compound 5, a second amount of grain polymeric material 2, and mineral fillers 32. The method further comprises processing the filtered intermediate compound 5, the grain polymeric material 2 and the mineral fillers 32 in the second extruder 120 into a final compound 7. Lastly, the method comprises filtering the final compound 7, obtaining a filtered final compound 8.

These steps have been described in the order in which the various materials run through the plant. They can, however, be carried out simultaneously, whereby for example while the second extruder 120 processes the filtered intermediate compound 5, new shreds of waste and grain polymeric material 2 are fed into the first extruder 110.

Preferably, the method further comprises supplying the second extruder 120 with additives and/or master material 6, including at least one dye, without feeding dyes to the first extruder 110.

Obviously a person skilled in the art will be able to make numerous equivalent modifications to the variants set forth above, without thereby departing from the scope of protection as defined by the appended claims.

## Claims

1. Plant (100) for producing compound (8), **characterized by** comprising:
- a first extruder (110),
- a first feed system (130) operatively connected to the first extruder (110), the first feed system (130) comprising at least a first feed member (131), which is configured to supply the first extruder (110) with at least shreds of plastic waste (1) and a first amount of grain polymeric material (2), wherein the shreds are subdivisions of plastic waste (1) in the form of loose sheets,
- said first extruder (110) being configured to extrude at least said shreds of plastic waste (1) and grain polymeric material (2) in an intermediate compound (4),
- a first filtering stage (180) downstream the first extruder (110) and configured to filter the intermediate compound (4) and obtain a filtered intermediate compound (5),
- a second extruder (120) downstream the first filtering stage (180),
- a second feed system (140) operatively connected to the second extruder (120), said second feed system (140) comprising at least a second feed member (141, 142, 143), which is configured to supply the second extruder (120) with at least the filtered intermediate compound (5), a second amount of grain polymeric material (2) and inorganic mineral fillers (32),
- said second extruder (120) being configured to extrude at least said filtered intermediate compound (5), grain polymeric material (2) and mineral fillers (32) in a final compound (7), and
- a second filtering stage (190) downstream the second extruder (120) and configured to filter the final compound (7) and obtain a filtered final compound (8).

2. Plant (100) according to claim 1, wherein the second feed system (140) is configured to supply the second extruder (120) with additives and/or master material and/or complementary material (6), preferably including at least a dye.

3. Plant (100) according to claim 2, wherein the first feed system (130) is not configured to supply the first extruder (110) with dyes and preferably with additives, master material and complementary material (6).

4. Plant (100) according to any one of claims 1 to 3, wherein the first filtering stage (180) comprises a first filter device (181), configured to retain first impurities, and a second filter device (182), located downstream the first filter device (181) and preferably configured to retain second impurities having a finer grain size than the first impurities.

5. Plant (100) according to any one of claims 1 to 4, wherein the first feed system (130) is configured to supply the first extruder (110) with a first amount of inorganic mineral fillers (31), and the second feed system (140) is configured to supply the second extruder (120) with a second amount of inorganic mineral fillers (32).

6. Plant (100) according to any one of claims 1 to 5, wherein the first feed system (130) comprises a thickener (131), configured to receive, shred and mix together said shreds of plastic waste (1), said first amount of grain polymeric material (2) and, preferably, said first amount of inorganic mineral fillers (31), obtaining a mixed material, and to discharge said mixed material into the first extruder (110).

7. Plant (100) according to any one of claims 1 to 6, comprising a waste supply line (150) comprising devices configured to shred plastic waste in form of shreds, mix the shreds together, and transport an adjustable amount of mixed shreds to the first feed system (130).

8. Plant (100) according to any one of claims 1 to 7, comprising a grain supply line (160), configured to supply grain polymeric material (2) to the first and/or the second feed system (130, 140), the grain supply line (160) comprising one or more storage silos (162) and one or more recirculating pipes (1641), configured to recirculate the grain polymeric material (2) in the one or more storage silos (162).

9. Plant (100) according to any one of claims 1 to 8, wherein the first extruder (110) is a single-screw extruder, and the second extruder (120) is a twin-screw extruder.

10. Plant (100) according to any one of claims 1 to 9, wherein the second extruder (120) comprises a degassing pump, configured to strip gas and moisture out of the filtered intermediate compound (5).

11. Plant (100) according to any one of claims 1 to 10, comprising, downstream the second filtering stage (190):
- a die (200) and a cutting assembly (210), configured together to granulate the filtered final compound (8),
- a cooling device (220), configured to cool and collect the granulated filtered final compound by means of a stream of water, and
- a centrifugal machine (230) configured to dry the granulated filtered final compound.

12. Method for producing compound (8), **characterized by** comprising the steps of:
- providing shreds of plastic waste (1);
- providing a first and a second amount of grain polymeric material (2);
- providing an amount of mineral fillers (32);
- providing a first extruder (110) and a second extruder (120);
- providing a first filter (180) and a second filter (190);
- supplying said shreds of plastic waste (1) and said first amount of grain polymeric material (2) to said first extruder (110),
- extruding, by said first extruder (110), said shreds of plastic waste (1) and grain polymeric material (2) to produce an intermediate compound (4),
- filtering by said filter (180) said intermediate compound (4), obtaining a filtered intermediate compound (5),
- supplying said filtered intermediate compound (5), said second amount of grain polymeric material (2) and said amount of mineral fillers (32) to said second extruder (120),
- extruding, by said second extruder (120), said filtered intermediate compound (5), grain polymeric material (2) and mineral fillers (32) to produce a final compound (7), and
- filtering said final compound (7) by said second filter (190) to obtain a filtered final compound (8).
